# EUROPEAN PATENT SPECIFICATION

(11) **EP 1 940 961 B1**
(45) Date of publication and mention of the grant of the patent: **22.10.2014**
(21) Application number: 06803539.3
(22) Date of filing: 13.09.2006
(51) Int. Cl.: C08L 79/08, C08L 67/03, C08L 83/00, C08K 3/22, C08L 83/10, C08L 83/12

(54) **FLAME RETARDANT POLYMER BLENDS**
FLAMMWIDRIGE POLYMERMISCHUNGEN
MELANGES POLYMERIQUES IGNIFUGES

(30) Priority: 16.09.2005 US 228728
(43) Date of publication of application: 09.07.2008
(73) Proprietor: GENERAL ELECTRIC COMPANY, Schenectady, NY 12345 (US)
(72) Inventor: GALLUCCI, Robert, Russell, Mount Vernon, IN 47620 (US); KERNICK, William, A., III, Evansville, IN 47711 (US); SANNER, Mark, Alan, Newburgh, IN 47630 (US); SINGH, Rajendra, Kashinath, Evansville, IN 47712 (US)
(74) Representative: Office Freylinger
(86) International application number: PCT/US2006/035726
(87) International publication number: WO 2007/035381

(56) References cited:
- EP-A- 0 704 487
- EP-A1- 0 519 657
- EP-A1- 0 594 386
- WO-A-2006/012250

## Description

### FIELD OF THE INVENTION

This invention relates to blends of polyimides, polyetherimides and polyetherimide sulfones with resorcinol based polyesters, or resorcinol based polyester carbonate polymers, and silicone copolymers having improved flame resistance. In some instances the flame retardant blends are transparent showing a high percent transmission with low haze. In other instances, where transparency is not desired, the addition of metal oxides may further improve flame resistance.

### BACKGROUND OF THE INVENTION

There has long been interest in developing thermoplastic resins that can resist burning. A specific area of concern is in developing plastics for transportation applications, such as rail cars and airplanes. Various evaluation techniques have been developed to test the effectiveness of such materials, for instance Federal Aviation Regulation (FAR) 25.853. In this test, sometimes referred to as the Ohio State University (OSU) rating, the time for a sample to reach peak heat release, the amount of energy released after 2 minutes and the peak heat release energy are measured. Lower heat release values and longer time to reach peak heat release are desirable. This is a demanding test designed to give some idea of the amount of time passengers would have to escape from a vehicle in the event of a fire, however it is not a replacement for device testing in end use applications nor is it a guarantee of performance in actual fire conditions. Polymer blends that have been used in these applications are described, for example, in US patent 5,051,483. These compositions combine polyetherimides (PEI) with a silicone polyetherimide and a polycarbonate (PC). Existing PEI-PC blends of this type are opaque. Despite the effectiveness of these compositions there still exists a need for even better flame resistance performance in this area. In addition the development of transparent flame resistant compositions would further expand the utility of these types of materials. Document EP 0594 386 describes a thermoplastic molding composition for molding ductile articles comprising a polyetherimide, a polyetherimide-siloxane, and a polyestercarbonate.

### BRIEF DESCRIPTION OF THE INVENTION

We have found a surprising improvement in the flame retardant (FR) performance, and FAR 25.853 rating, of polyimides, polyetherimides and polyetherimide sulfones blends with silicone copolymers and polycarbonates by making a small change in the polycarbonate structure. Replacement of polycarbonate bisphenol-A derived linkages with resorcinol derived ester linkages gives a very large improvement in heat release even in blends where the resorcinol based polymer is a minor component. Thus blends of polyimides, polyetherimides and polyetherimide sulfone with silicone copolymers and resorcinol based aryl polyesters show significantly improved FR properties. The addition of a metal oxide, such as titanium dioxide, has been shown to further improve FR performance in these blends. In addition the resorcinol based aryl polyester improves the solvent resistance of the flame retardant polymer composition. The blends also exhibit high flexural modulus and high tensile elongation at break.

### DETAILED DESCRIPTION OF THE INVENTION

Combination of silicone copolymers, for instance silicone polyimides or silicone polycarbonates, with high glass transition temperature (Tg) polyimide (PI), polyetherimide (PEI) and polyetherimide sulfone (PEIS) resins, with resorcinol derived polyaryl esters have surprisingly low heat release values and improved solvent resistance. The resorcinol derived aryl polyesters can also be a copolymer containing non-resorcinol based linkages, for instance a resorcinol - bisphenol-A copolyester carbonate. For best effect, resorcinol ester content (REC) should be greater than about 50 mole % of the polymer linkages being derived from resorcinol. Higher REC may be preferred. In some instances REC of greater than 75 mole %, or even as high as 90 or 100 mole% resorcinol derived linkages may be desired.

The amount of resorcinol ester containing polymer used in the flame retardant blend can vary widely using any effective amount to reduce heat release, increase time to peak heat release or to improve solvent resistance. In some instances resorcinol ester containing polymer can be from 1 to 80 wt% of the polymer blend. Some compositions of note will have 10-50% resorcinol based polyester. In other instances blends of polyetherimide or polyetherimide sulfone with high REC copolymers will have a single glass transition temperature (Tg) of about 150 - 210 °C.

The resorcinol based polyarylate resin should contain at least about 50 mole% of units derived from the reaction product of resorcinol, or functionalized resorcinol, with an aryl dicarboxylic acid or dicarboxylic acid derivatives suitable for the formation of aryl ester linkages, for example, carboxylic acid halides, carboxylic acid esters and carboxylic acid salts.

The composition according to the present invention is a composition with improved flame retardance comprising a blend of 50-99% by weight of one or more polyetherimide resins 0.1-10% by weight of one or more silicone copolymers, 1-50% by weight of one or more aryl polyester carbonate resins containing at least 50 mole% resorcinol derived linkages having the structure shown below: 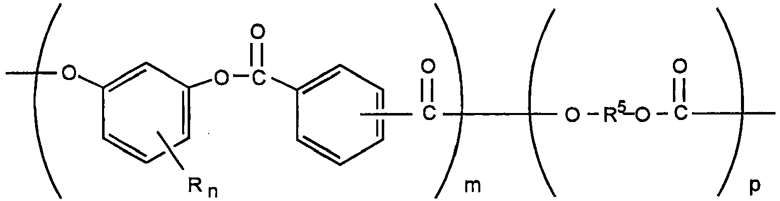 wherein R is at least one of C₁₋₁₂ alkyl, C₆-C₂₄ aryl, alkyl aryl, alkoxy or halogen, n is 0-4, R⁵ is at least one divalent organic radical, m is 4 - 150 and p is 2-200 and wherein greater than or equal to 50 mole % of the aryl polyester linkages are aryl ester linkages derived from resorcinol, the resorcinol based aryl polyester copolymer is substantially free of anhydride linkages linking at least two mers of the polyester chain and shows a decrease in molecular weight of less than 10% upon heating the copolymer at a temperature of 280-290°C for five minutes, 0-2% by weight of one or more phosphorus containing stabilizers and 0-20 % by weight of one or more metal oxides..

It is described that the resorcinol based polyarylate may further contain carbonate linkages derived from reaction of a bisphenol and a carbonate forming species, such as phosgene, making a polyester carbonate copolymer. The present document describes that resorcinol polyarylate carbonate copolymers will be comprised of the reaction products of iso and terephthalic acid, resorcinol and optionally, bisphenol A and phosgene. It is described that the resorcinol polyester carbonate copolymer will be made in such a way that the number of bisphenol dicarboxylic ester linkages is minimized, for example by pre-reacting the resorcinol moiety with the dicarboxylic acid moiety to form an aryl polyester block and then reacting a said block with the bisphenol and carbonate moiety to form the polycarbonate part of the copolymer.

The present document describes that it is comprised of polymers containing arylate polyester chain members. Said chain members comprise at least one diphenol residue in combination with at least one aromatic dicarboxylic acid residue. The present document describes that the diphenol residue is derived from a 1,3-dihydroxybenzene moiety, as illustrated in Formula I, commonly referred to throughout this specification as resorcinol or resorcinol moiety. Resorcinol or resorcinol moiety as used within the context of the present invention should be understood to include both unsubstituted 1,3-dihydroxybenzene and substituted 1,3-dihydroxybenzenes unless explicitly stated otherwise.

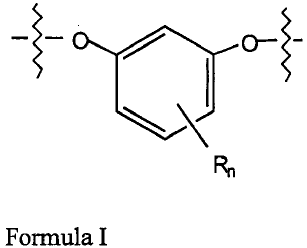

In Formula I R is at least one of C₁₋₁₂ alkyl, C₆-C₂₄ aryl, alkyl aryl, alkoxy or halogen, and n is 0-4.

Suitable dicarboxylic acid residues include aromatic dicarboxylic acid residues derived from monocyclic moieties. The present document describes suitable dicarboxylic acid residues include those derived from isophthalic acid, terephthalic acid, or mixtures of isophthalic and terephthalic acids. Suitable dicarboxylic acid residues also include those derived from polycyclic moieties, illustrative examples of which include diphenyl dicarboxylic acid, diphenylether dicarboxylic acid, and naphthalenedicarboxylic acid, especially naphthalene-2,6-dicarboxylic acid. The present document describes the aromatic dicarboxylic acid residues are derived from mixtures of isophthalic and/or terephthalic acids as typically illustrated in Formula II.

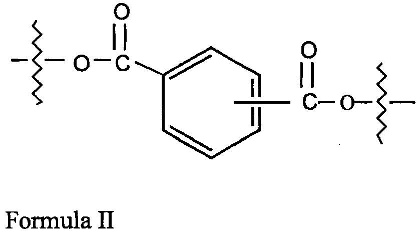

Therefore, the present document describes thermally stable polymers comprising resorcinol arylate polyester chain members as typically illustrated in Formula III wherein R and n are as previously defined:

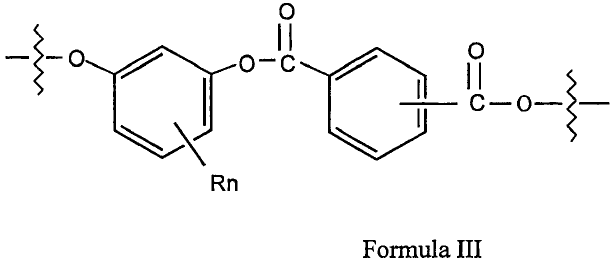

The present document describesa composition made of a resin made using an interfacial polymerization method of preparing polymers comprising resorcinol arylate polyester chain members substantially free of anhydride linkages, said method comprising a first step of combining at least one resorcinol moiety and at least one catalyst in a mixture of water and at least one organic solvent substantially immiscible with water. Suitable resorcinol moieties comprise units of Formula IV : 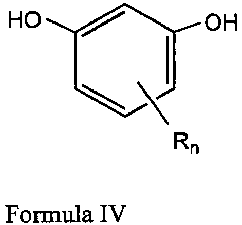 wherein R is at least one of C₁₋₁₂ alkyl, C₆-C₂₄ aryl, alkyl aryl, alkoxy or halogen, and n is 0-4. Alkyl groups, if present, are typically straight-chain, branched, or cyclic alkyl groups, and are most often located in the ortho position to both oxygen atoms although other ring locations are contemplated. Suitable C₁₋₁₂ alkyl groups include, but are not limited to, methyl, ethyl, n-propyl, isopropyl, butyl, iso-butyl, t-butyl, hexyl, cyclohexyl, nonyl, decyl, and aryl-substituted alkyl, including benzyl. The present document describes an alkyl group is methyl. Suitable halogen groups are bromo, chloro, and fluoro. The value for n may be 0-3, in some embodiments 0-2, and in still 0-1. The present document describes a resorcinol moiety is 2-methylresorcinol. The present documents describes the resorcinol moiety is an unsubstituted resorcinol moiety in which n is zero. The method further comprises combining at least one catalyst with the reaction mixture. It is described that said catalyst may be present in various embodiments at a total level of 0.01 to 10 mole %, and in some embodiments at a total level of 0.2 to 6 mole % based on total molar amount of acid chloride groups. Suitable catalysts comprise tertiary amines, quaternary ammonium salts, quaternary phosphonium salts, hexaalkylguanidinium salts, and mixtures thereof.

Suitable dicarboxylic acid dihalides may comprise aromatic dicarboxylic acid dichlorides derived from monocyclic moieties, illustrative examples of which include isophthaloyl dichloride, terephthaloyl dichloride, or mixtures of isophthaloyl and terephthaloyl dichlorides. Suitable dicarboxylic acid dihalides may also comprise aromatic dicarboxylic acid dichlorides derived from polycyclic moieties, illustrative examples of which include diphenyl dicarboxylic acid dichloride, diphenylether dicarboxylic acid dichloride, and naphthalenedicarboxylic acid dichloride, especially naphthalene-2,6-dicarboxylic acid dichloride; or from mixtures of monocyclic and polycyclic aromatic dicarboxylic acid dichlorides. The present document describes the dicarboxylic acid dichloride comprises mixtures of isophthaloyl and/or terephthaloyl dichlorides as typically illustrated in Formula V.

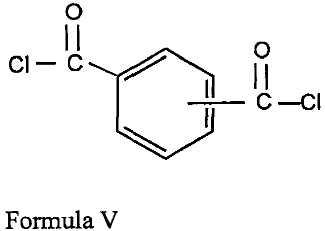

Either or both of isophthaloyl and terephthaloyl dichlorides may be present. It is described that the dicarboxylic acid dichlorides comprise mixtures of isophthaloyl and terephthaloyl dichloride in a molar ratio of isophthaloyl to terephthaloyl of about 0.25-4.0:1; in other embodiments the molar ratio is about 0.4-2.5:1; and in still other embodiments the molar ratio is about 0.67-1.5:1.

Dicarboxylic acid halides provide only one method of preparing the polymers mentioned herein. Other routes to make the resorcinol arylate linkages are also contemplated using, for example, the dicarboxylic acid, a dicarboxylic acid ester, especially an activated ester, or dicarboxylate salts or partial salts.

At least one chain-stopper (also referred to sometimes hereinafter as capping agent) may also be present in the method and compositions of the invention. A purpose of adding at least one chain-stopper is to limit the molecular weight of polymer comprising resorcinol arylate polyester chain members, thus providing polymer with controlled molecular weight and favorable processability. Typically, at least one chain-stopper is added when the resorcinol arylate-containing polymer is not required to have reactive end-groups for further application. In the absence of chain-stopper resorcinol arylate-containing polymer may be either used in solution or recovered from solution for subsequent use such as in copolymer formation which may require the presence of reactive end-groups, typically hydroxy, on the resorcinol-arylate polyester segments. A chain-stopper may be at least one of mono-phenolic compounds, mono-carboxylic acid chlorides, and/or mono-chloroformates. Typically, the at least one chain-stopper may be present in quantities of 0.05 to 10 mole %, based on resorcinol moieties in the case of mono-phenolic compounds and based on acid dichlorides in the case of mono-carboxylic acid chlorides and/or mono-chloroformates.

Suitable mono-phenolic compounds include monocyclic phenols, such as phenol, C₁-C₂₂ alkyl-substituted phenols, p-cumyl-phenol, p-tertiary-butyl phenol, hydroxy diphenyl; monoethers of diphenols, such as p-methoxyphenol. Alkyl-substituted phenols include those with branched chain alkyl substituents having 8 to 9 carbon atoms as described in U.S. Patent 4,334,053. In some embodiments mono-phenolic chain-stoppers are phenol, p-cumylphenol, and resorcinol monobenzoate.

Suitable mono-carboxylic acid chlorides include monocyclic, mono-carboxylic acid chlorides, such as benzoyl chloride, C₁-C₂₂ alkyl-substituted benzoyl chloride, toluoyl chloride, halogen-substituted benzoyl chloride, bromobenzoyl chloride, cinnamoyl chloride, 4-nadimidobenzoyl chloride, and mixtures thereof; polycyclic, mono-carboxylic acid chlorides, such as trimellitic anhydride chloride, and naphthoyl chloride; and mixtures of monocyclic and polycyclic mono-carboxylic acid chlorides. The chlorides of aliphatic monocarboxylic acids with up to 22 carbon atoms are also suitable. Functionalized chlorides of aliphatic monocarboxylic acids, such as acryloyl chloride and methacryoyl chloride, are also suitable. Suitable mono-chloroformates include monocyclic, mono-chloroformates, such as phenyl chloroformate, alkyl-substituted phenyl chloroformate, p-cumyl phenyl chloroformate, toluene chloroformate, and mixtures thereof.

A chain-stopper can be combined together with the resorcinol moieties, can be contained in the solution of dicarboxylic acid dichlorides, or can be added to the reaction mixture after production of a precondensate. If mono-carboxylic acid chlorides and/or mono-chloroformates are used as chain-stoppers, they are often introduced together with dicarboxylic acid dichlorides. These chain-stoppers can also be added to the reaction mixture at a moment when the chlorides of dicarboxylic acid have already reacted substantially or to completion. If phenolic compounds are used as chain-stoppers, they can be added in one embodiment to the reaction mixture during the reaction, or, in, cyanuric acid another embodiment, before the beginning of the reaction between resorcinol moiety and acid chloride moiety. When hydroxy-terminated resorcinol arylate-containing precondensate or oligomers are prepared, then chain-stopper may be absent or only present in small amounts to aid control of oligomer molecular weight.

In another embodiment the invention may encompass the inclusion of at least one branching agent such as a trifunctional or higher functional carboxylic acid chloride and/or trifunctional or higher functional phenol. Such branching agents, if included, can typically be used in quantities of 0.005 to 1 mole %, based on dicarboxylic acid dichlorides or resorcinol moieties used, respectively. Suitable branching agents include, for example, trifunctional or higher carboxylic acid chlorides, such as trimesic acid tri acid chloride, 3,3',4,4'-benzophenone tetracarboxylic acid tetrachloride, 1,4,5,8-naphthalene tetracarboxylic acid tetrachloride or pyromellitic acid tetrachloride, and trifunctional or higher phenols, such as 4,6-dimethyl-2,4,6-tri-(4-hydroxyphenyl)-2-heptene, 4,6-dimethyl-2,4,6-tri-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenyl methane, 2,2-bis-[4,4-bis-(4-hydroxyphenyl)-cyclohexyl]-propane, 2,4-bis-(4-hydroxyphenylisopropyl)-phenol, tetra-(4-hydroxyphenyl)-methane, 2,6-bis-(2-hydroxy-5-methylbenzyl)-4-methyl phenol, 2-(4-hydroxyphenyl)-2-(2,4-dihydroxyphenyl)-propane, tetra-(4-[4-hydroxyphenylisopropyl]-phenoxy)-methane, 1,4-bis-[(4,4-dihydroxytriphenyl)methyl]-benzene. Phenolic branching agents may be introduced first with the resorcinol moieties while acid chloride branching agents may be introduced together with acid dichlorides.

It is described that the composition comprises thermally stable resorcinol arylate polyesters made by the present method and substantially free of anhydride linkages linking at least two mers of the polyester chain. It is described that said polyesters comprise dicarboxylic acid residues derived from a mixture of iso- and terephthalic acids as illustrated in Formula VI: 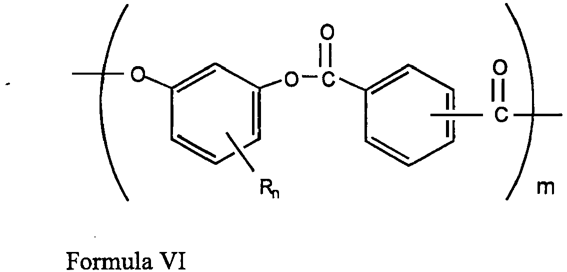 wherein R is at least one of C₁₋₁₂ alkyl, C₆-C₂₄ aryl, alkyl aryl, alkoxy or halogen, n is 0-4, and m is at least about 5. In various embodiments n is zero and m is between about 10 and about 300. It is described that the molar ratio of isophthalate to terephthalate is in one embodiment about 0.25-4.0:1, in another embodiment about 0.4-2.5:1, and in still another embodiment about 0.67-1.5:1. Substantially free of anhydride linkages means that said polyesters show decrease in molecular weight in one embodiment of less than 30% and in another embodiment of less than 10% upon heating said polymer at a temperature of about 280-290°C for five minutes.

It is described resorcinol arylate copolyesters containing soft-block segments as disclosed in commonly owned US Patent 5,916,997. The term soft-block as used herein, indicates that some segments of the polymers are made from non-aromatic known to impart flexibility to the soft-block-containing polymers. The copolymers include those comprising structural units of Formulas I, VII, and VIII: 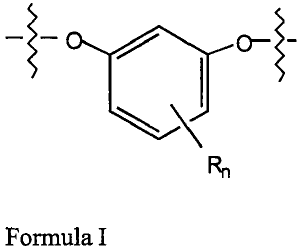 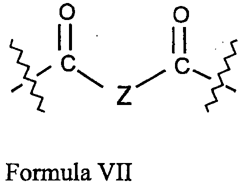 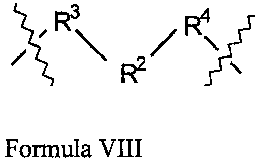 wherein R and n are as previously defined, Z is a divalent aromatic radical, R² is a C₃₋₂₀ straight chain alkylene, C₃₋₁₀ branched alkylene, or C₄₋₁₀ cyclo- or bicycloalkylene group, and R³ and R⁴ each independently represent 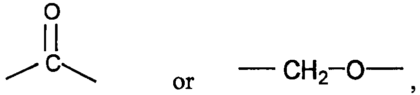 wherein Formula VIII contributes from about 1 to about 45 mole percent to the ester linkages of the polyester. It is described a composition wherein Formula VIII contributes in various embodiments from about 5 to about 40 mole percent to the ester linkages of the polyester, and in other embodiments from about 5 to about 20 mole percent to the ester linkages of the polyester. It is described a composition wherein R² represents in one embodiment C₃₋₁₄ straight chain alkylene, or C₅₋₆ cycloalkylene, and in another embodiment R² represents C₃₋₁₀ straight-chain alkylene or C₆-cycloalkylene. Formula VII represents an aromatic dicarboxylic acid residue. The divalent aromatic radical Z in Formula VII may be derived in various embodiments from at least one of the suitable dicarboxylic acid residues as defined hereinabove, and in some embodiments at least one of 1,3-phenylene, 1,4-phenylene, or 2,6-naphthylene. In various embodiments Z comprises at least about 40 mole percent 1,3-phenylene. In various embodiments of copolyesters containing soft-block chain members n in Formula I is zero.

The composition according to the present invention comprises block copolyestercarbonates comprising resorcinol arylate-containing block segments in combination with organic carbonate block segments. The segments comprising resorcinol arylate chain members in such copolymers are substantially free of anhydride linkages. Substantially free of anhydride linkages means that the copolyestercarbonates show decrease in molecular weight in one embodiment of less than 10% and in another embodiment of less than 5% upon heating said copolyestercarbonate at a temperature of about 280-290°C for five minutes. The block copolyestercarbonates include those comprising alternating arylate and organic carbonate blocks, typically as illustrated in Formula IX, wherein R and n are as previously defined, and R⁵ is at least one divalent organic radical:

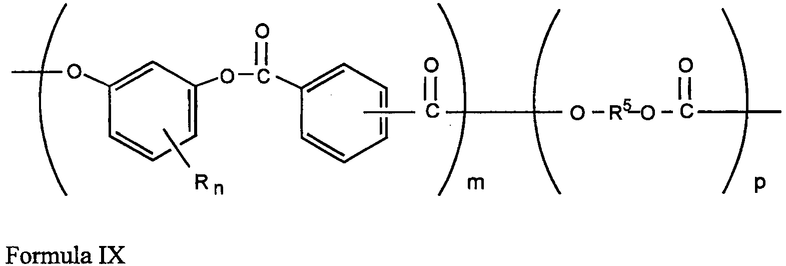

The arylate blocks have a degree of polymerization (DP), represented by m, in one embodiment of at least about 4, in another embodiment of at least about 10, in another embodiment of at least about 20 and in still another embodiment of about 30-150. The DP of the organic carbonate blocks, represented by p, is in one embodiment generally at least about 2, in another embodiment at least about 10-20 and in still another embodiment about 2-200. The distribution of the blocks may be such as to provide a copolymer having any desired weight proportion of arylate blocks in relation to carbonate blocks. In general, the content of arylate blocks is in one embodiment about 10-95% by weight and in another embodiment about 50-95% by weight.

Although a mixture of iso- and terephthalate is illustrated in Formula IX, the dicarboxylic acid residues in the arylate blocks may be derived from any suitable dicarboxylic acid residue, as defined hereinabove, or mixture of suitable dicarboxylic acid residues, including those derived from aliphatic diacid dichlorides (so-called "soft-block" segments). In various embodiments n is zero and the arylate blocks comprise dicarboxylic acid residues derived from a mixture of iso- and terephthalic acid residues, wherein the molar ratio of isophthalate to terephthalate is in one embodiment about 0.25-4.0:1, in another embodiment about 0.4-2.5:1, and in still another embodiment about 0.67-1.5:1.

In the organic carbonate blocks, each R⁵ is independently a divalent organic radical. In various embodiments said radical comprises at least one dihydroxy-substituted aromatic hydrocarbon, and at least about 60 percent of the total number of R⁵ groups in the polymer are aromatic organic radicals and the balance thereof are aliphatic, alicyclic, or aromatic radicals. Suitable R⁵ radicals include m-phenylene, p-phenylene, 4,4'-biphenylene, 4,4'-bi(3,5-dimethyl)-phenylene, 2,2-bis(4-phenylene)propane, 6,6'-(3,3,3',3'-tetramethyl-1,1'-spirobi[1H-indan]) and similar radicals such as those which correspond to the dihydroxy-substituted aromatic hydrocarbons disclosed by name or formula (generic or specific) in U.S. Patent 4,217,438.

In some embodiments each R⁵ is an aromatic organic radical and in other embodiments a radical of Formula X:

-A¹-Y-A²- Formula X

wherein each A¹ and A² is a monocyclic divalent aryl radical and Y is a bridging radical in which one or two carbon atoms separate A¹ and A². The free valence bonds in Formula X are usually in the meta or para positions of A¹ and A² in relation to Y. Compounds in which R⁵ has Formula X are bisphenols, and for the sake of brevity the term "bisphenol" is sometimes used herein to designate the dihydroxy-substituted aromatic hydrocarbons. It should be understood, however, that non-bisphenol compounds of this type may also be employed as appropriate.

In Formula X, A¹ and A² typically represent unsubstituted phenylene or substituted derivatives thereof, illustrative substituents (one or more) being alkyl, alkenyl, and halogen (particularly bromine). In one embodiment unsubstituted phenylene radicals are preferred. Both A¹ and A² are often p-phenylene, although both may be o- or m-phenylene or one o- or m-phenylene and the other p-phenylene.

The bridging radical, Y, is one in which one or two atoms, separate A¹ from A². In a particular embodiment one atom separates A¹ from A². Illustrative radicals of this type are -O-, -S-, -SO- or -SO₂-, methylene, cyclohexyl methylene, 2-[2.2.1]-bicycloheptyl methylene, ethylene, isopropylidene, neopentylidene, cyclohexylidene, cyclopentadecylidene, cyclododecylidene, adamantylidene, and like radicals.

In some embodiments gem-alkylene (commonly known as "alkylidene") radicals are preferred. Also included, however, are unsaturated radicals. In some embodiments the preferred bisphenol is 2,2-bis(4-hydroxyphenyl)propane (bisphenol-A or BPA), in which Y is isopropylidene and A¹ and A² are each p-phenylene. Depending upon the molar excess of resorcinol moiety present in the reaction mixture, R⁵ in the carbonate blocks may at least partially comprise resorcinol moiety. In other words, in some embodiments of the invention carbonate blocks of Formula X may comprise a resorcinol moiety in combination with at least one other dihydroxy-substituted aromatic hydrocarbon.

Diblock, triblock, and multiblock copolyestercarbonates are encompassed in the present invention. It is described that the chemical linkages between blocks comprising resorcinol arylate chain members and blocks comprising organic carbonate chain members may comprise at least one of
(a) an ester linkage between a suitable dicarboxylic acid residue of an arylate moiety and an -O-R⁵-O- moiety of an organic carbonate moiety, for example as typically illustrated in Formula XI, wherein R⁵ is as previously defined: 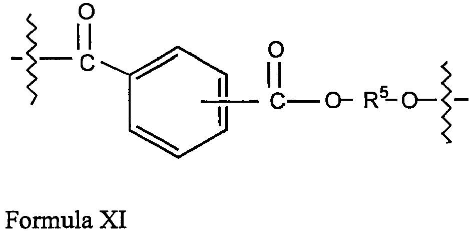
and (b) a carbonate linkage between a diphenol residue of a resorcinol arylate moiety and a -(C=O)-O- moiety of an organic carbonate moiety as shown in Formula XII, wherein R and n are as previously defined :

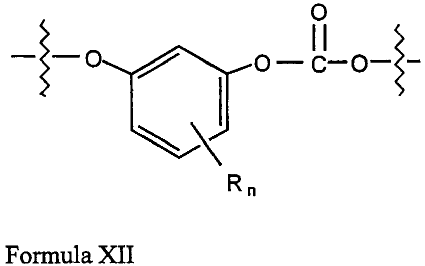

The presence of a significant proportion of ester linkages of the type (a) may result in undesirable color formation in the copolyestercarbonates. Although the invention is not limited by theory, it is believed that color may arise, for example, when R⁵ in Formula XI is bisphenol A and the moiety of Formula XI undergoes Fries rearrangement during subsequent processing and/or light-exposure. It is described that the copolyestercarbonate is substantially comprised of a diblock copolymer with a carbonate linkage between resorcinol arylate block and an organic carbonate block It is described that the copolyestercarbonate is substantially comprised of a triblock carbonate-ester-carbonate copolymer with carbonate linkages between the resorcinol arylate block and organic carbonate end-blocks.

Copolyestercarbonates with at least one carbonate linkage between a thermally stable resorcinol arylate block and an organic carbonate block are typically prepared from resorcinol arylate-containing oligomers prepared by various embodiments of the invention and containing in one embodiment at least one and in another embodiment at least two hydroxy-terminal sites. Said oligomers typically have weight average molecular weight in one embodiment of about 10,000 to about 40,000, and in another embodiment of about 15,000 to about 30,000. Thermally stable copolyestercarbonates may be prepared by reacting said resorcinol arylate-containing oligomers with phosgene, at least one chain-stopper, and at least one dihydroxy-substituted aromatic hydrocarbon in the presence of a catalyst such as a tertiary amine.

In one instance a composition with improved flame retardance comprising a blend of a resin selected from the group consisting of: polyimides, polyetherimides, polyetherimide sulfones, and mixtures thereof, a silicone copolymer and a resorcinol based aryl polyester resin wherein greater than or equal to 50 mole % of the aryl polyester linkages are aryl ester linkages derived from resorcinol is contemplated. In the context of this invention the term "polymer linkage" or "a polymer linkage" is defined as the reaction product of at least two monomers that form the polymer.

In some instances polyimides, polyetherimides, polyetherimide sulfones and mixtures thereof, will have a hydrogen atom to carbon atom ratio (H/C) of less than or equal to about 0.75 are of note. Polymers with higher carbon content relative to hydrogen content, that is a low ratio of hydrogen to carbon atoms, often show improved FR performance. These polymers have lower fuel value and may give off less energy when burned. They may also resist burning through a tendency to form an insulating char layer between the polymeric fuel and the source of ignition. Independent of any specific mechanism or mode of action it has been observed that such polymers, with a low H/C ratio, have superior flame resistance. In some instances the H/C ratio can be less than 0.75. In other instances a H/C ratio of greater than about 0.4 is preferred in order to give polymeric structures with sufficient flexible linkages to achieve melt processability. The H/C ratio of a given polymer or copolymer can be determined from its chemical structure by a count of carbon and hydrogen atoms independent of any other atoms present in the chemical repeat unit.

In some cases the flame retardant polymer blends, and articles made from them, will have 2 minute heat release of less than about 50 kW-min/m². In other instances the peak heat release will be less than about 50 kW/m². A time to peak heat release of more than about 2 minute is also a beneficial aspect of certain compositions and articles made from them. In other instances a time to peak heat release time of greater than about 4 minutes may be achieved.

In some compositions the blend of polyimides, polyetherimides, polyetherimide sulfones and mixtures thereof with silicone copolymer and aryl polyester resin containing at least 50 mole% resorcinol derived linkages will be transparent. For example having a percent transmittance at about 2 mm of greater than about 50% as measured by ASTM method D1003. In other instances the percent haze of these transparent compositions, as measured by ASTM method D1003, will be less than about 25%. In other embodiments the percent transmittance will be greater than about 60% and the percent haze less than about 20%. In still other instances the composition and article made from it will have a transmittance of greater than about 50% and a haze value below about 25% with a peak heat release of less than or equal to 50 kW/m².

In the flame retardant blends presented herein the polyimides, polyetherimides, polyetherimide sulfones and mixtures thereof may be present in amounts of about 1 to about 99 weight percent, based on the total weight of the composition. Within this range, the amount of the polyimides, polyetherimides, polyetherimide sulfones and mixtures thereof may be greater than or equal to about 20, more specifically greater than or equal to about 50, and even more specifically greater than or equal to about 70 weight percent.

It is described a composition comprising a flame retardant polymer blend of;
a) 1-99% by weight of a polyetherimide, polyetherimide sulfone and mixtures thereof,
b) 99-1% by weight of an aryl polyester resin containing at least 50 mole% resorcinol derived linkages,
c) 0.1-30% by weight of silicone copolymer
d) 0-20% by weight of one or more metal oxides
It is described a composition comprising a flame retardant polymer blend of;
a) 50-99% by weight of one or more polyetherimide or, polyetherimide sulfone resins,
b) 1-50% by weight of one or more aryl polyester carbonate resins containing at least 50 mole% resorcinol derived linkages,
c) 0.1-10% by weight of silicone copolymer
d) 0-20% by weight of one or more metal oxides, and
e) 0-2% by weight of one or more phosphorus containing stabilizers

Thermoplastic polyimides have the general formula (XIII) 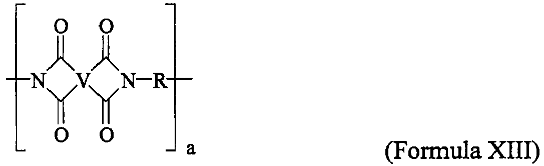 wherein a is more than 1, typically about 10 to about 1000 or more, and more preferably about 10 to about 500; and wherein V is a tetravalent linker without limitation, as long as the linker does not impede synthesis or use of the polyimide. Suitable linkers include but are not limited to: (a) substituted or unsubstituted, saturated, unsaturated or aromatic monocyclic and polycyclic groups having about 5 to about 50 carbon atoms, (b) substituted or unsubstituted, linear or branched, saturated or unsaturated alkyl groups having 1 to about 30 carbon atoms; or combinations thereof. Preferred linkers include but are not limited to tetravalent aromatic radicals of formula (XIV), such as 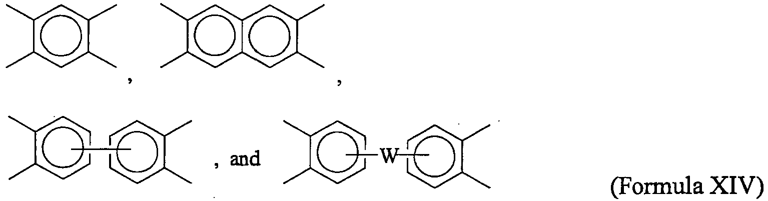 wherein W is a divalent moiety selected from the group consisting of -O-, -S-, -C(O)-, SO₂-, -SO-, -C_{y}H_{2y}- (y being an integer from 1 to 8), and fluoronated derivatives thereof, including perfluoroalkylene groups, or a group of the formula -O-Z-O-wherein the divalent bonds of the -W- or the -O-Z-O- group are in the 3,3', 3,4', 4,3', or the 4,4' positions, and wherein Z includes, but is not limited, to divalent radicals of formula (XV). 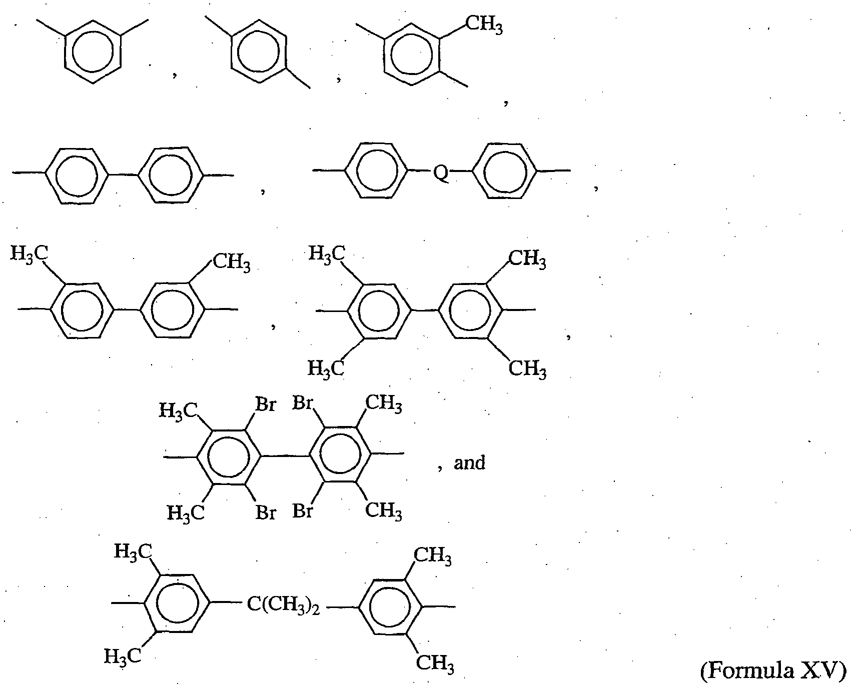 R in formula (XIII) includes but is not limited to substituted or unsubstituted divalent organic radicals such as: (a) aromatic hydrocarbon radicals having about 6 to about 20 carbon atoms and halogenated derivatives thereof; (b) straight or branched chain alkylene radicals having about 2 to about 20 carbon atoms; (c) cycloalkylene radicals having about 3 to about 20 carbon atoms, or (d) divalent radicals of the general formula (XVI) 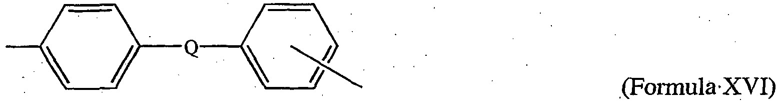 wherein Q includes but is not limited to a divalent moiety selected from the group consisting of -O-, -S-, -C(O)-, -SO₂-, -SO-, -C_{y}H_{2y}- (y being an integer from 1 to 8), and fluorinated derivatives thereof, including perfluoroalkylene groups.

Some classes of polyimides include polyamidimides, polyetherimide sulfones and polyetherimides, particularly those polyetherimides known in the art which are melt processable, such as those whose preparation and properties are described in U.S. Patents 3,803,085 and 3,905,942.

Polyetherimide resins may comprise more than 1, typically about 10 to about 1000 or more, and more preferably about 10 to about 500 structural units, of the formula (XVII) 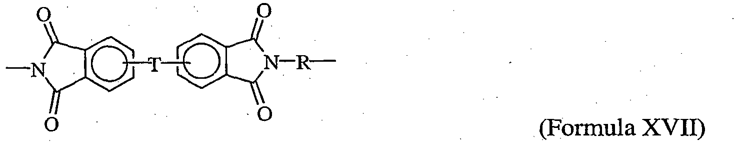 wherein T is -O- or a group of the formula -O-Z-O- wherein the divalent bonds of the -O- or the -O-Z-O- group are in the 3,3', 3,4', 4,3', or the 4,4' positions, and wherein Z, includes, but is not limited, to divalent radicals of formula (XV) as defined above. In one embodiment, the polyimide, polyetherimide or polyetherimde sulfone may be a copolymer. Mixtures of the polyimide, polyetherimide or polyetherimde sulfone may also be employed.

The polyetherimide can be prepared by any of the methods well known to those skilled in the art, including the reaction of an aromatic bis(ether anhydride) of the formula (XVIII) 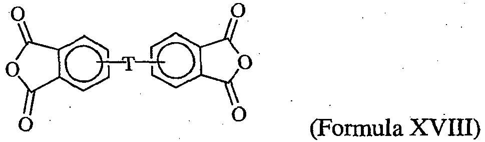 with an organic diamine of the formula (XIX)

H₂N-R-NH₂ (Formula XIX)

wherein T is defined as described above and wherein the moiety R in formula (XIX) includes but is not limited to substituted or unsubstituted divalent organic radicals such as: (a) aromatic hydrocarbon radicals having about 6 to about 24 carbon atoms and halogenated derivatives thereof; (b) straight or branched chain alkylene radicals having about 2 to about 20 carbon atoms; (c) cycloalkylene radicals having about 3 to about 20 carbon atoms, or (d) divalent radicals of the general formula (XVI).

Examples of specific aromatic bis anhydrides and organic diamines are disclosed, for example, in US Patents 3,972,902 and 4,455,410. Illustrative examples of aromatic bis anhydrides include: 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride and 4-(2,3-dicarboxyphenoxy)-4'-(3,4-dicarboxyphenoxy)diphenyl sulfone dianhydride, as well as various mixtures thereof.

Another class of aromatic bis(ether anhydride)s included by formula (XVIII) above includes, but is not limited to, compounds wherein T is of the formula (XX) 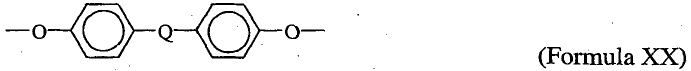 and the ether linkages, for example, are preferably in the 3,3', 3,4', 4,3', or 4,4' positions, and mixtures thereof, and where Q is as defined above.

Any diamino compound may be employed in this invention. Examples of suitable compounds are ethylenediamine, propylenediamine, trimethylenediamine, diethylenetriamine, triethylenetertramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2,2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3, 5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1,3-diamino-4-isopropylbenzene, bis(4-aminophenyl) sulfide, bis (4-aminophenyl) sulfone, bis(4-aminophenyl) ether and 1,3-bis(3-aminopropyl) tetramethyldisiloxane. Mixtures of these compounds may also be used. The preferred diamino compounds are aromatic diamines, especially m- and p-phenylenediamine, sulfonyl dianiline and mixtures thereof.

In one embodiment, the polyetherimide resin comprises structural units according to formula (XVII) wherein each R is independently p-phenylene or m-phenylene or a mixture thereof and T is a divalent radical of the formula (XXI)

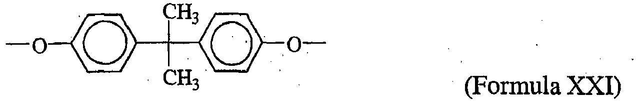

Included among the many methods of making the polyimides, particularly polyetherimides, are those disclosed in U S Patents 3,847,867, 3,852,242, 3,803,085, 3905,942, 3,983,093, and 4,443,591. These patents mentioned for the purpose of teaching, by way of illustration, general and specific methods for preparing polyimides.

Polyimides, polyetherimides and polyetherimide sulfone may have a melt index of about 0.1 to about 10 grams per minute (g/min), as measured by American Society for Testing Materials (ASTM) D1238 at 340-370°C, using a 6.6 kilogram (kg) weight. In a one embodiment, the polyetherimide resin has a weight average molecular weight (Mw) of about 10,000 to about 150,000 grams per mole (g/mole), as measured by gel permeation chromatography, using a polystyrene standard. In another embodiment the polyetherimide has Mw of 20,000 to 60,000. Such polyetherimide resins typically have an intrinsic viscosity greater than about 0.2 deciliters per gram (dl/g), preferably about 0.35 to about 0.7 dl/g measured in m-cresol at 25°C. Examples of some polyetherimides useful in blends described herein are listed in ASTM D5205 "Standard Classification System for Polyetherimide (PEI) Materials".

Any siloxane copolymer can be used in effective amounts to improve the heat release performance of the composition. In some instances siloxane copolymers of polyetherimides, polyetherimide sulfones, polysulfones, polyphenylene ether sulfones, polyether sulfones, polyphenylene ethers maybe used. In other instances, polyetherimide, or polycarbonate siloxane containing copolymers maybe effective in reducing heat release and improving FR performance. Mixtures of different types of siloxane copolymers are also contemplated. Siloxane copolymers with from 20-50 wt% siloxane content are preferred in some instances.

The block length of the siloxane segment of the copolymer may be of any effective length. In some examples it may be of 2-50 siloxane repeating units. In other instances the siloxane block length it may be from 5-30 repeat units. In many instances dimethyl siloxanes may be used.

Siloxane polyetherimide copolymers are a specific embodiment of the siloxane copolymer that may be used in the blends of this invention. Examples of such siloxane polyetherimides are shown in US Patents 4,404,350, 4,808,686 and 4,690,997. In one instance polyetherimide siloxanes can be prepared in a manner similar to that used for polyetherimides, except that a portion, or all, of the organic diamine reactant is replaced by an amine-terminated organo siloxane, for example of the formula XXII wherein g is an integer from 1 to about 50, in some other instances g may be from about 5 to about 30 and R' is an aryl, alkyl or aryl alky group of from 2 to 20 carbon atoms.

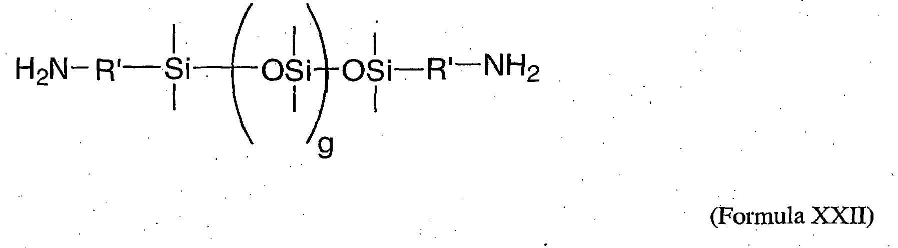

Some polyetherimde siloxanes may be formed by reaction of an organic diamine, or mixture of diamines, of formula XIX and the amine-terminated organo siloxane of formula XXII and one or more dianhydrides of formula XVIII. The diamino components may be physically mixed prior to reaction with the bis-anhydride(s), thus forming a substantially random copolymer. Alternatively block or alternating copolymers may be formed by selective reaction of XIX and XXII with dianhydrides to make polyimide blocks that are subsequently reacted together. In another instance the siloxane used to prepare the polyetherimde copolymer may have anhydride rather than amine functional end groups, for example as described in US Patent 4,404,350.

In one instance the siloxane polyetherimide copolymer can be of formula XXIII wherein T, R' and g are described as above, n is from 5-100 and Ar is an aryl or alkyl aryl group of from 6 to 36 carbons.

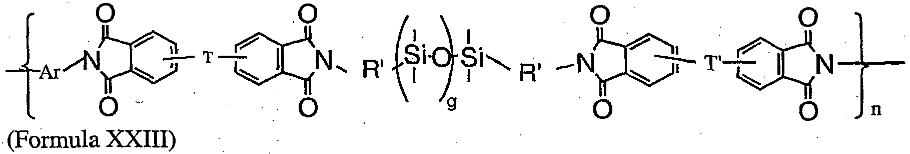

In some siloxane polyetherimides the diamine component of the siloxane polyetherimide copolymers may contain from about 20 to 50 mole % of the amine-terminated organo siloxane of formula XXII and from about 50 to 80 mole % of the organic diamine of formula XIX. In some siloxane copolymers, the siloxane component contains from about 25 to about 40 mole % of the amine or anhydride terminated organo siloxane.

The high flexural modulus and high tensile elongation of the compositions make them useful for applications, such as sheets, where they show resistance to damage by impact and also show sufficient stiffness so that they will not flex or bend under load. The combination of toughness, shown in high elongation at break, stiffness, as shown in a high flexural modulus and flame resistance, as shown in a low heat release values, make sheets or other articles formed from these compositions very useful. For example such sheets can be used for the construction of vehicles for transportation, for instance aircraft or train interiors. They can also be used in building and construction. Sheets can be used as prepared, for example by extrusion, compression molding or calendering and can be thermoformed or shaped by other methods. Films and sheets can also be components in more complex multilayer constructions. Good impact is shown, in some instances by having a tensile elongation at break, for example, as measured by ASTM method D638, of greater than or equal to about 25%. High stiffness is shown in other instances by having a flexural modulus, for examples as measured by ASTM method D790, of greater than or equal to about 390Kpsi (2691 Mpa).

It has been found that the addition of a metal oxide to the blends of polyetherimide, siloxane copolymer and resorcinol ester containing polymer can further improve flame resistance (FR) performance by decreasing heat release and increasing the time to peak heat release. Titanium dioxide was found to be effective. Other metal oxides include zinc oxides, boron oxides, antimony oxides, iron oxides and transition metal oxides. Metal oxides that are white may be desired in some instances. Metal oxides may be used alone or in combination with other metal oxides. Metal oxides may be used in any effective amount, in some instances at from 0.01 to 20 wt% of the polymer blend. The metal oxides may also contain silicone atoms.

Other useful additives include smoke suppressants such as metal borate salts for example zinc borate, alkali metal or alkaline earth metal borate or other borate salts. Additionally other boron containing compounds, such as boric acid, borate esters, boron oxides or other oxygen compounds of boron may be useful. Conventional flame retardant additives, for example phosphate esters, sulfonate salts and halogenated aromatic compounds may also be employed. Mixtures of any or all of these flame retardants may also be used. Examples of halogenated aromatic compounds, are brominated phenoxy resins, halogenated polystyrenes, halogenated imides, brominated polycarbonates, brominated epoxy resins and mixtures thereof. Examples of sulfonate salts are potassium perfluoro butyl sulfonate, sodium tosylate, sodium benzene sulfonate, sodium dichloro phenyl benzene sulfonate, potassium diphenyl sulfone sulfonate and sodium methane sulfonate. In some instances sulfonate salts of alkaline and alkaline earth metals are preferred. Examples of phosphate flame retardants are tri aryl phosphates, tri cresyl phosphate, triphenyl phosphate, bisphenol A phenyl diphosphates, resorcinol phenyl diphosphates, phenyl-bis- (3,5,5'-trimethylhexyl phosphate), ethyl diphenyl phosphate, bis(2-ethylhexyl)-p-tolyl phosphate, bis(2-ethylhexyl)-phenyl phosphate, tri(nonylphenyl)phosphate, phenyl methyl hydrogen phosphate, di(dodecyl)-p-tolyl phosphate, halogenated triphenyl phosphates, dibutyl phenyl phosphate, 2-chloroethyldiphenyl phosphate, p-tolyl bis(2,5,5'-trimethylhexyl) phosphate, 2-ethylhexyldiphenyl phosphate, diphenyl hydrogen phosphate, resorcinol diphosphate and the like.

In some instances it maybe desired to have flame retardant compositions that are essentially free of halogen atoms, especially bromine and chlorine. Essentially free of halogen atoms means that in some embodiments the composition has less than about 3% halogen by weight of the composition and in other embodiments less than about 1% halogen by weight of the composition. The amount of halogen atoms can be determined by ordinary chemical analysis.

The composition may also optionally include a fluoropolymer in any effective amount to provide anti-drip or other improved properties to the resin composition. In some instances the fluoro polymer may be used in an amount of 0.01 to about 5.0 % fluoropolymer by weight of the composition.. Some possible examples of suitable fluoropolymers and methods for making such fluoropolymers are set forth, for example, in US Patents 3,671,487, 3,723,373 and 3,383,092. Suitable fluoropolymers include homopolymers and copolymers that comprise structural units derived from one or more fluorinated alpha-olefin monomers. The term "fluorinated alpha-olefin monomer" means an alpha-olefin monomer that includes at least one fluorine atom substituent. Some of the suitable fluorinated alpha-olefin monomers include, for example, fluoro ethylenes such as, for example, CF₂=CF₂, CHF=CF₂, CH₂=CF₂ and CH₂=CHF and fluoro propylenes such as, for example, CF₃CF=CF₂, CF₃CF=CHF, CF₃CH=CF₂, CF₃CH=CH₂, CF₃CF=CHF, CHF₂CH=CHF and CF₃CF=CH₂.

Some of the suitable fluorinated alpha-olefin copolymers include copolymers comprising structural units derived from two or more fluorinated alpha-olefin monomers such as, for example, poly(tetrafluoro ethylene-hexafluoro ethylene), and copolymers comprising structural units derived from one or more fluorinated monomers and one or more non-fluorinated monoethylenically unsaturated monomers that are copolymerizable with the fluorinated monomers such as, for example, poly(tetrafluoroethylene-ethylene-propylene) copolymers. Suitable non-fluorinated monoethylenically unsaturated monomers include for example, alpha-olefin monomers such as, for example, ethylene, propylene, butene, acrylate monomers such as for example, methyl methacrylate, butyl acrylate, and the like, with poly(tetrafluoroethylene) homopolymer (PTFE) preferred.

The blends may further contain fillers and reinforcements for example fiber glass, milled glass, glass beads, flake and the like. Minerals such as talc, wollastonite, mica, kaolin or montmorillonite clay, silica, quartz and barite may be added. The compositions can also be modified with effective amounts of inorganic fillers, such as, for example, carbon fibers and nanotubes, metal fibers, metal powders, conductive carbon, and other additives including nano-scale reinforcements.

Other additives include, antioxidants such as phosphites, phosphonites and hindered phenols. Phosphorus containing stabilizers including triaryl phosphite and aryl phosphonates are of note as useful additives. Difunctional phosphorus containing compounds can also be employed. Stabilizers with a molecular weight of greater than or equal to about 300 are preferred. In other instances phosphorus containing stabilizers with a molecular weight of greater than or equal to 500 are useful. Phosphorus containing stabilizers are typically present in the composition at 0.05-0.5% by weight of the formulation. Colorants as well as light stabilizers and UV absorbers may also be present in the blend. Flow aids and mold release compounds are also contemplated. Examples of mold release agents are alkyl carboxylic acid esters, for example, penta erythritol tetrastearate, glycerin tristearate and ethylene glycol distearate. Mold release agents are typically present in the composition at 0.05-0.5% by weight of the formulation. Preferred mold release agents will have high molecular weight, typically greater than about 300, to prevent loss of the release agent from the molten polymer mixture during melt processing.

The compositions of the present invention can be blended with the aforementioned ingredients by a variety of methods involving intimate admixing of the materials with any additional additives desired in the formulation. A preferred procedure includes melt blending, although solution blending is also possible. Because of the availability of melt blending equipment in commercial polymer processing facilities, melt processing methods are generally preferred. Illustrative examples of equipment used in such melt processing methods include: co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 250°C and about 370°C in the molten resin composition, although higher temperatures can be used provided that the residence time of the resin in the processing equipment is kept short. In some embodiments the melt processed composition exits processing equipment such as an extruder through small exit holes in a die, and the resulting strands of molten resin are cooled by passing the strands through a water bath. The cooled strands can be chopped into small pellets for packaging and further handling.

The compositions of the invention can be formed into articles by any number of methods. Preferred methods include, for example, injection molding, blow molding, compression molding, profile extrusion, sheet or film extrusion, gas assist molding, structural foam molding and thermoforming. Examples of such articles include, but are not limited to, cookware, food service items, medical devices, trays, plates, handles, helmets, animal cages, electrical connectors, enclosures for electrical equipment, engine parts, automotive engine parts, lighting sockets and reflectors, electric motor parts, power distribution equipment, communication equipment, computers and the like, including devices that have molded in snap fit connectors. Other articles include, for example, sheets, films, multilayer sheets, multilayer films, molded parts, extruded profiles, coated parts, fibers and foams: windows, luggage racks, wall panels, chair parts, lighting panels, diffusers, shades, partitions, lenses, skylights, lighting devices, reflectors, ductwork, cable trays, conduits, pipes, cable ties, wire coatings, electrical connectors, air handling devices, ventilators, louvers, insulation, bins, storage containers, doors, hinges, handles, sinks, mirror housing, mirrors, toilet seats, hangers, coat hooks, shelving, ladders, hand rails, steps, carts, trays, cookware, food service equipment, communications equipment and instrument panels. In some instances it may be desirable to have articles that are clear, in some instances having a percent transmittance of greater than 50%. In other instances articles with a percent haze below 25% may be of note.

The resorcinol polyarylate based blends described herein can also be made into film and sheet as well as components of laminate systems.

Compositions discussed herein may be converted to articles using common thermoplastic processes such as film and sheet extrusion, Film and sheet extrusion processes may include and are not limited to melt casting, blown film extrusion and calendering, Co-extrusion and lamination processes may be employed to form composite multi-layer films or sheets. Single or multiple layers of coatings may further be applied to the single or multi-layer substrates to impart additional properties such as scratch resistance, ultra violet light resistance, aesthetic appeal, etc. Coatings may be applied through standard application techniques such as rolling, spraying, dipping, brushing, or flow coating. Film and sheet may alternatively be prepared by casting a solution or suspension of the composition in a suitable solvent onto a substrate, belt or roll followed by removal of the solvent. Films may also be metallized using standard processes such as sputtering, vacuum deposition and lamination with foil.

Oriented films may be prepared through blown film extrusion or by stretching cast or calendered films in the vicinity of the thermal deformation temperature using conventional stretching techniques. For instance, a radial stretching pantograph may be employed for multi-axial simultaneous stretching; an x-y direction stretching pantograph can be used to simultaneously or sequentially stretch in the planar x-y directions. Equipment with sequential uniaxial stretching sections can also be used to achieve uniaxial and biaxial stretching, such as a machine equipped with a section of differential speed rolls for stretching in the machine direction and a tenter frame section for stretching in the transverse direction.

Compositions discussed herein may be converted to multiwall sheet comprising a first sheet having a first side and a second side, wherein the first sheet comprises a thermoplastic polymer, and wherein the first side of the first sheet is disposed upon a first side of a plurality of ribs; and a second sheet having a first side and a second side, wherein the second sheet comprises a thermoplastic polymer, wherein the first side of the second sheet is disposed upon a second side of the plurality of ribs, and wherein the first side of the plurality of ribs is opposed to the second side of the plurality of ribs.

The films and sheets described above may further be thermoplastically processed into shaped articles via forming and molding processes including but not limited to thermoforming, vacuum forming, pressure forming, injection molding and compression molding. Multi-layered shaped articles may also be formed by injection molding a thermoplastic resin onto a single or multi-layer film or sheet substrate as described below:
1) Providing a single or multi-layer thermoplastic substrate having optionally one or more colors on the surface, for instance, using screen printing of a transfer dye.
2) Conforming the substrate to a mold configuration such as by forming and trimming a substrate into a three dimensional shape and fitting the substrate into a mold having a surface which matches the three dimensional shape of the substrate.
3) Injecting a thermoplastic resin into the mold cavity behind the substrate to (i) produce a one-piece permanently bonded three-dimensional product or (ii) transfer a pattern or aesthetic effect from a printed substrate to the injected resin and remove the printed substrate, thus imparting the aesthetic effect to the molded resin.

Those skilled in the art will also appreciate that common curing and surface modification processes including and not limited to heat-setting, texturing, embossing, corona treatment, flame treatment, plasma treatment and vacuum deposition may further be applied to the above articles to alter surface appearances and impart additional functionalities to the articles.

Accordingly, another embodiment of the invention relates to articles, sheets and films prepared from the compositions above.

Without further elaboration, it is believed that one skilled in the art can, using the description herein, utilize the present invention. The following examples are included to provide addition guidance to those skilled in the art of practicing the claimed invention. The examples provided are merely representative of the work and contribute to the teaching of the present invention. Accordingly, these examples are not intended to limit the invention in any manner.

All patents cited herein are incorporated by reference.

### EXAMPLES OF THE INVENTION

Blends were.prepared by extrusion of mixtures of resorcinol based polyester carbonate resin with polyetherimide and silicone polyimide copolymer resin in a 2.5 inch single screw, vacuum vented extruder. Compositions are listed in wt% of the total composition except where noted otherwise. The extruder was set at about 285 to 340 °C. The blends were run at about 90 rpm under vacuum. The extrudate was cooled, pelletized and dried at 120 °C. Test samples were injection molded at a set temperature of 320-360 °C and mold temperature of 120 °C using a 30 sec. cycle time.

Properties were measured using ASTM test methods. Melt flow rate (MFR) was run on dried pellets as per ASTM D1238 at 295 °C using a 6.7 Kg weight. All molded samples were conditioned for at least 48h at 50% relative humidity prior to testing. Notched Izod impact values were measured at room temperature on 3.2 mm thick bars as per ASTM D256. Heat distortion temperature (HDT) was measured at 1.82 MPa (264 psi) on 3.2 mm thick bars as per ASTM D648. Biaxial, or instrumented impact was measured on 102 x 3.2 mm discs at 23 °C using ASTM method D3763, peak impact energy is reported. Tensile properties were measured on 3.2 mm type I bars as per ASTM method D638. Flexural properties were measured on 3.2 mm bars as per ASTM method D790. Solvent resistance was measured on 3.2 mm bars using ASTM method D543. Percent transmittance (%T) and percent haze (%H) were measured as per ASTM method D1003 at 2.0 mm.

Heat release testing was done on 15.2 x 15.2 cm plaques 2.0 mm thick using the Ohio State University (OSU) rate-of-heat release apparatus, as measured by the method listed in FAR 25.853. Heat release was measured at two-minutes in kW-min/m² (kilowatt minutes per square meter). Peak heat release was measured as kW/m² (kilowatts per square meter). The time to peak heat release, in minutes, was also measured. The heat release test method is also described in the "Aircraft Materials Fire Test Handbook" DOT/FAA/AR-00/12, Chapter 5" Heat Release Test for Cabin Materials".

Note that letters designate comparative examples while numbers designate examples of the invention.

### Materials

Resorcinol ester polycarbonate (ITR) resin used in these examples is a polymer made from the condensation of a 1:1 mixture of iso and terephthaloyl chloride with resorcinol, bisphenol A (BPA) and phosgene. The ITR polymers are named by the approximate mole ratio of ester linkages to carbonate linkages. ITR9010 has about 82 mole % resorcinol ester linkages, 8 mole % resorcinol carbonate linkages and about 10 mole % BPA carbonate linkages. Tg = 131°C

PEI = ULTEM 1000 polyetherimide, made by reaction of bisphenol A dianhydride with about an equal molar amount of m-phenylene diamine, from GE Plastics

PEI-Siloxane is a polyetherimide dimethyl siloxane copolymer made from the imidization reaction of m-phenylene diamine, BPA-dianhydride and a bis-aminopropyl functional methyl silicone containing on average about 10 silicone atoms. It has about 34 wt% siloxane content and a Mn of about 24,000 as measured by gel permeation chromatography.

PC is BPA polycarbonate, LEXAN 130 from GE Plastics.

Note that letters designate comparative examples while numbers designate examples of the invention.

Examples 1 and 2 of Table 1 show how replacement of PC with a resorcinol ester polycarbonate (ITR9010), in a PEI/ silicone-polyimide copolymer blend, gives a surprising reduction in two-minute and total heat release compared to the control example A. The two-minute heat release is reduced by half. The time to peak heat release is also increased delaying the time at which the fire reached maximum intensity. Note that addition of the resorcinol ester polycarbonate also increases flow (MFR= melt flow rate g/ 10min, measured at 295 °C) and improves elongation at break.

**Table 1**

| Examples | A | 1 | 2 |
|---|---|---|---|
| PEI | 76 | 76 | 76 |
| ITR9010 | 0 | 10 | 20 |
| PEI-Siloxane | 4 | 4 | 4 |
| PC | 20 | 10 | 0 |
| TiO₂ | 3 | 3 | 3 |
| | | | |
| Heat Release | | | |
| 2 min (kW-min/m²) | 24 | 10 | 12 |
| Peak (kWm²) | 53 | 34 | 29 |
| Time to Peak (Min) | 4.40 | 4.60 | 4.50 |
| | | | |
| MFR@295 °C | 2.3 | 3.0 | 3.6 |
| | | | |
| Flex Mod Kpsi | 458 | 464 | 462 |
| Flex Str. Kpsi | 21.8 | 22.1 | 22.4 |
| | | | |
| T Str. (Y) Kpsi | 14.3 | 14.8 | 15.0 |
| % Elong (B) | 24 | 39 | 50 |
| | | | |
| HDT 264 psi °C | 169 | 163 | 164 |
| | | | |
| E Max load ft-lbs | 50 | 54 | 56 |
| N Izod ft-lbs/in | 1.5 | 1.4 | 1.3 |

Table 2 shows a series of PEI blends with various amounts of a resorcinol ester polycarbonate and 1 to 4% of a silicone polyimide copolymer. Examples 3 - 9 all show a very low two-minute and a low peak heat release. Samples all show a high MFR indicating good melt flow. HDT is greater than 150 °C in all examples. The examples also all have a flexural modulus of ≥ 400 Kpsi (2760 Mpa). Also note that even with low levels of the polyetherimide, for instance, in examples 6 and 8 where it is less than half of the total blend, surprisingly low heat release values are still achieved. In this set of experiments examples 3 - 9 have 3.0 parts per hundred (phr) titanium dioxide and 0.1 phr of a tri-aryl phosphite present.

**Table 2**

| Examples | 3 | 4 | 5 | 6 | 7 | 8 | 9 |
|---|---|---|---|---|---|---|---|
| PEI | 56.5 | 78.0 | 63.0 | 48.0 | 69.5 | 46.0 | 76.0 |
| ITR9010 | 42.5 | 20.0 | 35.0 | 50.0 | 27.5 | 50.0 | 20.0 |
| PEI-Siloxane | 1.0 | 2.0 | 2.0 | 2.0 | 3.0 | 4.0 | 4.0 |
| Heat Release | | | | | | | |
| 2 min (kW-min/m²) | 21 | 16 | 20 | 16 | 12 | 27 | 22 |
| Peak (kW/m²) | 31 | 30 | 34 | 34 | 27 | 42 | 34 |
| Time to Peak (Min) | 4.00 | 4.39 | 4.19 | 4.13 | 3.49 | 2.02 | 3.60 |
| | | | | | | | |
| MFR@295°C | 4.9 | 2.3 | 3.8 | 4.2 | 2.8 | 7.2 | 2.2 |
| | | | | | | | |
| Flex Mod Kpsi | 457 | 480 | 467 | 452 | 468 | 432 | 480 |
| Flex Str Kpsi | 21.9 | 23.3 | 22.3 | 21.5 | 22.7 | 21.0 | 23.0 |
| | | | | | | | |
| T Str. (Y) Kpsi | 13.5 | 14.3 | 13.7 | 13.0 | 13.8 | 12.7 | 14.2 |
| % Elong (B) | 99 | 81 | 91 | 89 | 29 | 87 | 77 |
| | | | | | | | |
| HDT 264 psi °C | 159 | 175 | 164 | 153 | 169 | 153 | 174 |
| | | | | | | | |
| E Max load ft-lbs | 58 | 55 | 60 | 56 | 35 | 53 | 64 |
| N Izod ft-lbs/in | 1.2 | 1.2 | 1.4 | 1.7 | 1.5 | 1.6 | 1.0 |

| | | | | | | | |
|---|---|---|---|---|---|---|---|
| All blends 3 phr TiO₂ & 0.1 phr triaryl phosphite | | | | | | | |

Improved solvent resistance of the resorcinol based polymer blends compared to the polycarbonate blends is shown by exposing the blend of control example A made with PC and example 9 using the same amount (20 wt%), of the IR9010, to 1,1,1-trichloroethane (TCE) or butyl cellosolve. Molded bars (3.2 mm) were exposed to solvent for 1 hr at 23 °C at a strain of 2000 psi (13.8 Mpa). The control sample A showed slight crazing and surface etching in the TCE after 1 hr. The ITR9010-PEI blend of example 9 showed no change after 1 hr. exposure to TCE. After 1 hr exposure to butyl cellosolve the control sample A showed slight crazing. Example 9 showed no solvent attack.

Examples 10 and 11 in Table 3 show the beneficial effect of the addition of TiO₂ in reducing heat release and increasing the time to peak heat. Note that while both examples 10 and 11 have excellent heat release properties, example 11 has somewhat lower peak heat release values and a longer time to peak heat showing the beneficial effect of a metal oxide additive.

**Table 3**

| Examples | 10 | 11 |
|---|---|---|
| PEI | 67.5 | 67.5 |
| ITR9010 | 30.0 | 30.0 |
| PEI-Siloxane | 2.5 | 2.5 |
| TiO₂ | 0.0 | 3.0 |
| Heat Release | | |
| 2 min (kW-min/m²) | 16 | 12 |
| Peak (kW/m²) | 31 | 29 |
| Time to Peak (Min) | 3.87 | 4.69 |
| | | |
| MFR@295°C | 3.1 | 3.0 |
| | | |
| Flex Mod Kpsi | 467 | 470 |
| Flex Str Kpsi | 23.3 | 22.9 |
| | | |
| T Str. (Y) Kpsi | 14.3 | 14.0 |
| % Elong (B) | 52 | 86 |
| | | |
| HDT 264 psi °C | 169 | 169 |
| | | |
| E Max load ft-lbs | 54 | 57 |
| N Izod ft-lbs/in | 0.9 | 1.0 |

Examples 12 and 13 are shown in Table 4. These blends combine the resorcinol ester polycarbonate, polyetherimide and silicone-polyimide copolymer with an additional non-arylate polycarbonate, bisphenol-A polycarbonate (PC). The blends show HDT above 150 °C, a flexural modulus of ≥ 390 Kpsi (2691 Mpa) with very low two-minute and peak heat release values.

**Table 4**

| Examples | 12 | 13 |
|---|---|---|
| PEI | 68 | 58 |
| ITR9010 | 20 | 30 |
| PEI-Siloxane | 2 | 2 |
| PC | 10 | 10 |
| TiO₂ | 3 | 3 |
| | | |
| Heat Release | | |
| 2 min (kW-min/m²) | 17 | 15 |
| Peak (kW/m²) | 29 | 35 |
| Time to Peak (Min) | 3.21 | 4.34 |
| | | |
| MFR@295 °C | 2.6 | 4.0 |
| | | |
| Flex Mod Kpsi | 465 | 485 |
| Flex Str Kpsi | 22.3 | 21.9 |
| | | |
| T Str. (Y) Kpsi | 13.8 | 13.3 |
| % Elong (B) | 82 | 100 |
| | | |
| HDT 264 psi °C | 169 | 161 |
| | | |
| E Max load ft-lbs | 55 | 58 |
| N Izod ft-lbs/in | 1.2 | 1.3 |

Examples 14-16 are shown in Table 5. These blends have high resorcinol ester polycarbonate content. Even with low PEI siloxane content and low PEI content the blends still demonstrate improved flame resistance as shown by low heat release values and long times to peak heat release. The blends have excellent flow as shown by the high MFR, along with a high modulus and strength. Tensile elongation at break is above 25% in all examples. Note that at 2.0 mm the percent transmittance is above 70% while the haze is low, below 10 % even in these three component polymer blends. Notched Izod impact strength is above 2.0 ft-lbs/in.

**Table 5**

| Examples | 14 | 15 | 16 |
|---|---|---|---|
| PEI | 19.15 | 18.40 | 17.65 |
| ITR 9010 | 80.0 | 80.0 | 80.0 |
| PEI Siloxane | 0.75 | 1.50 | 2.25 |
| Triaryl Phosphite | 0.1 | 0.1 | 0.1 |
| | | | |
| Heat Release | | | |
| 2 min (kW-min/m²) | 23 | 18 | 18 |
| Peak (kW/m²) | 39 | 40 | 40 |
| Time to Peak (Min) | 3.74 | 3.34 | 3.64 |
| Comments | foamy char | foamy char | foamy char |
| MFR@295 °C | 13.9 | 14.8 | 14.5 |
| | | | |
| Flex Mod Kpsi | 399 | 395 | 393 |
| Flex Str. Kpsi | 19.3 | 19.4 | 19.3 |
| | | | |
| T Str. (Y) Kpsi | 12.4 | 12.4 | 12.3 |
| % Elong (B) | 40 | 45 | 46 |
| | | | |
| HDT 264 psi °C | 133 | 134 | 133 |
| | | | |
| E Max load ft-lbsf | 50.7 | 50.6 | 52.9 |
| N Izod ft-lbs/in | 2.7 | 2.5 | 2.6 |
| | | | |
| % Transmittance @ 2.0 mm | 74.3 | 72.4 | 72.5 |
| % Haze @ 2.0mm | 5.9 | 6.6 | 5.8 |

Examples 17-19 are shown in Table 6. These blends have about equal content of resorcinol ester polycarbonate and PEI. Even with low PEI siloxane content (0.75 to 2.25 wt%) the blends still demonstrate low heat release values. The blends have good flow as shown by the high MFR along with a high modulus (>390 Kpsi) and strength. Tensile elongation at break is above 25% in all examples. Note that at 2.0 mm the percent transmittance is above 60% while the haze is low, below 10 % in these polymer blends. Notched Izod impact strength is above 2.0 ft-lbs/in in all three examples.

**Table 6**

| Examples | 17 | 18 | 19 |
|---|---|---|---|
| PEI | 49.15 | 48.40 | 47.65 |
| ITR 9010 | 50.0 | 50.0 | 50.0 |
| PEI Siloxane | 0.75 | 1.50 | 2.25 |
| Triaryl Phosphite | 0.1 | 0.1 | 0.1 |
| | | | |
| Heat Release | | | |
| 2 min (kW-min/m²) | 14 | 12 | 13 |
| Peak (kW/m²) | 36 | 31 | 33 |
| Time to Peak (Min) | 3.94 | 4.26 | 4.62 |

| Comments | foamy char | foamy char | foamy char |
|---|---|---|---|
| MFR@295 °C | 6.7 | 6.9 | 7.0 |
| | | | |
| Flex Mod Kpsi | 441 | 430 | 433 |
| Flex Str Kpsi | 22.1 | 21.7 | 21.8 |
| | | | |
| T Str. (Y) Kpsi | 13.9 | 13.7 | 14.1 |
| % Elong (B) | 38 | 54 | 80 |
| | | | |
| HDT 264 psi °C | 155 | 151 | 151 |
| | | | |
| E Max load ft-lbs f | 61.1 | 53.1 | 59.6 |
| N Izod ft-lbs/in | 1.4 | 1.6 | 1.5 |
| | | | |
| % Transmittance @ 2.0 mm | 73.0 | 72.4 | 68.8 |
| % Haze @ 2.0mm | 2.5 | 3.1 | 5.8 |

Examples 20-22 are shown in Table 7. These blends contain a lower amount of resorcinol ester polycarbonate. With very low PEI siloxane content (0.75 to 2.25 wt%) the blends still demonstrate low heat release values and low times to peak heat release. The blends show useful flow for melt processing applications along with a high modulus (>390 Kpsi) and strength. Tensile elongation at break is above 25% in all examples. Note that at 2.0 mm the percent transmittance is above 60% while the haze is low, below 10 % in these polymer blends.

**Table 7**

| Examples | 20 | 21 | 22 |
|---|---|---|---|
| PEI | 79.15 | 78.40 | 77.70 |
| ITR 9010 | 20.0 | 20.0 | 20.0 |
| PEI Siloxane | 0.75 | 1.50 | 2.25 |
| Triaryl Phosphite | 0.1 | 0.1 | 0.1 |
| | | | |
| Heat Release | | | |
| 2 min (kW-min/m²) | 13 | 10 | 9 |
| Peak (kW/m²) | 29 | 27 | 26 |
| Time to Peak (Min) | 2.70 | 2.91 | 4.69 |

| Comments | foamy char | foamy char | foamy char |
|---|---|---|---|
| MFR@295 °C | 2.1 | 2.1 | 2.3 |
| | | | |
| Flex Mod Kpsi | 467 | 473 | 473 |
| Flex Str Kpsi | 23.9 | 24.4 | 24.2 |
| | | | |
| T Str. (Y) Kpsi | 16.0 | 15.8 | 15.7 |
| % Elong (B) | 95 | 72 | 28 |
| | | | |
| HDT 264 psi °C | 171 | 176 | 175 |
| | | | |
| E Max load ft-lbsf | 58.3 | 57.1 | 62.2 |
| N Izod ft-lbs/in | 1.0 | 1.0 | 1.2 |
| | | | |
| % Transmittance @ 2.0 mm | 72.1 | 70.1 | 66.4 |
| % Haze @ 2.0mm | 2.5 | 4.0 | 7.0 |

Table 8 contains control experiments B-G that show the heat release values for various blends with no added silicone-polyimide copolymer. In some cases 3 phr TiO₂ has been added to the polymer. Heat release values are higher than those of the examples of the invention and times to peak heat release are shorter, indicating inferior FR performance.

**Table 8**

| Control Examples | B | C | D | E | F | G |
|---|---|---|---|---|---|---|
| PEI | 100 | 0 | 80 | 70 | 65 | 50 |
| ITR9010 | 0 | 100 | 20 | 30 | 35 | 50 |
| TiO₂ | 0 | 0 | 3 | 0 | 3 | 3 |
| Heat Release | | | | | | |
| 2 min (kW-min/m²) | 34 | 46 | 45 | 35 | 40 | 42 |
| Peak (kW/m²) | 62 | 70 | 63 | 66 | 52 | 53 |
| Time to Peak (Min) | 1.83 | 1.55 | 1.94 | 1.71 | 1.46 | 1.36 |

## Claims

1. A composition with improved flame retardance comprising a blend of 50-99% by weight of one or more polyetherimide resins 0.1-10% by weight of one or more silicone copolymers, 1-50% by weight of one or more aryl polyester carbonate resins containing at least 50 mole% resorcinol derived linkages having the structure shown below: 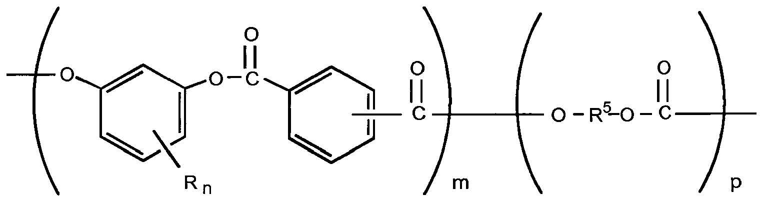 wherein R is at least one of C₁₋₁₂ alkyl, C₆-C₂₄ aryl, alkyl aryl, alkoxy or halogen, n is 0-4, R⁵ is at least one divalent organic radical, m is 4 - 150 and p is 2-200 and wherein greater than or equal to 50 mole % of the aryl polyester linkages are aryl ester linkages derived from resorcinol, the resorcinol based aryl polyester copolymer is substantially free of anhydride linkages linking at least two mers of the polyester chain and shows a decrease in molecular weight of less than 10% upon heating the copolymer at a temperature of 280-290°C for five minutes, 0-2% by weight of one or more phosphorus containing stabilizers and 0-20 % by weight of one or more metal oxides.

2. The composition of Claim 1, wherein the silicone copolymer is selected from the group consisting of; polyimide siloxanes, polyetherimide siloxanes, polyetherimide sulfone siloxanes, polycarbonate siloxanes, polyestercarbonate siloxanes, polysulfone siloxanes, polyether sulfone siloxanes, polyphenylene ether sulfone siloxanes and mixtures thereof.

3. The composition of Claim 1, wherein the silicone copolymer content is from 0.1 to 10.0 wt% of the polymer blend.

4. The composition of Claim 1, wherein the silicone copolymer has from 20-50 wt% siloxane content.

5. The composition of Claim 1, wherein the polyetherimides, have a hydrogen atom to carbon atom ratio of less than or equal to 0.75.

6. The composition of Claim 1, further comprising one or more metal oxides at 0.1 to 20% by weight of the polymer blend.

7. The composition of Claim 1, having a heat distortion temperature (HDT), as measured by ASTM D648, of greater than or equal to 150 °C.

8. The composition of Claim 1, further comprising a fluoropolymer.

9. The composition of Claim 1, further comprising a compound containing at least one boron atom.

10. The composition of Claim 1, which has a peak heat release, as measured by FAR 25.853, of less than 50 kW/m².

11. A composition of Claim 1, wherein the flame retardant polymer blend has a percent transmittance at 2.0 mm, as measured by ASTM D1003, of greater than or equal to 50 percent.

12. A composition of Claim 1, wherein the flame retardant polymer blend has a percent haze at 2.0 mm, as measured by ASTM D1003, of less than or equal to 25 percent.

13. An article made from the composition of any of Claims 1, 11, and 12.

## Patentansprüche

1. Zusammensetzung mit verbesserter Flammhemmung, umfassend eine Mischung aus 50-99 Gew.-% eines oder mehrerer Polyetherimidharze, 0,1-10 Gew.-% eines oder mehrerer Silikon-Copolymere, 1-50 Gew.-% eines oder mehrerer Arylpolyestercarbonatharze enthaltend zu mindestens 50 Mol-% von Resorcinol stammende Bindungen mit der unten dargestellten Struktur: 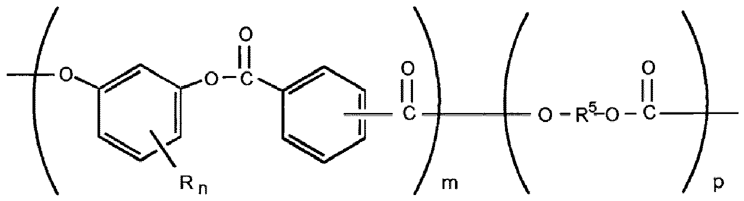 wobei R mindestens eines von C₁₋₁₂-Alkyl, C₆-C₂₄-Aryl, Alkylaryl, Alkoxy oder Halogen ist, n 0-4 ist, R⁵ mindestens ein zweiwertiger organischer Rest ist, m 4-150 ist und p 2-200 ist und wobei über oder gleich 50 Mol-% der Arylpolyesterbindungen von Resorcinol stammende Arylesterbindungen sind, wobei das auf Resorcinol basierende Arylpolyester-Copolymer im Wesentlichen frei von mindestens zwei Mere der Polyesterkette verknüpfenden Anhydridbindungen ist und eine Abnahme des Molekulargewichts von unter 10 % nach fünf Minuten Erwärmen des Copolymers bei einer Temperatur von 280-290 °C zeigt, 0-2 Gew.-% eines oder mehrerer phosphorhaltiger Stabilisatoren und 0-20 Gew.-% eines oder mehrerer Metalloxide.

2. Zusammensetzung nach Anspruch 1, wobei das Silikon-Copolymer aus der Gruppe bestehend aus Polyimidsiloxanen, Polyetherimidsiloxanen, Polyetherimidsulfonsiloxanen, Polycarbonatsiloxanen, Polyestercarbonatsiloxanen, Polysulfonsiloxanen, Polyethersulfonsiloxanen, Polyphenylenethersulfonsiloxanen und Mischungen davon ausgewählt ist.

3. Zusammensetzung nach Anspruch 1, wobei der Silikon-Copolymer-Anteil 0,1 bis 10,0 Gew.-% der Polymermischung ausmacht.

4. Zusammensetzung nach Anspruch 1, wobei das Silikon-Copolymer zu 20-50 Gew.-% einen Siloxananteil aufweist.

5. Zusammensetzung nach Anspruch 1, wobei die Polyetherimide ein Wasserstoffatom-Kohlenstoffatom-Verhältnis unter oder gleich 0,75 aufweisen.

6. Zusammensetzung nach Anspruch 1, ferner umfassend eines oder mehrere Metalloxide zu 0,1 bis 20 Gew.-% der Polymermischung.

7. Zusammensetzung nach Anspruch 1 mit einer gemäß ASTM D648 gemessen Wärmeformbeständigkeitstemperatur (HDT) über oder gleich 150 °C.

8. Zusammensetzung nach Anspruch 1, ferner umfassend ein Fluorpolymer.

9. Zusammensetzung nach Anspruch 1, ferner umfassend eine Verbindung, die mindestens ein Boratom enthält.

10. Zusammensetzung nach Anspruch 1, welche eine gemäß FAR 25.853 gemessene maximale Wärmefreisetzung unter 50 kW/m² aufweist.

11. Zusammensetzung nach Anspruch 1, wobei die flammhemmende Polymermischung eine gemäß ASTM D1003 gemessene prozentuale Transmission über oder gleich 50 Prozent bei 2,0 mm aufweist.

12. Zusammensetzung nach Anspruch 1, wobei die flammhemmende Polymermischung eine gemäß ASTM D1003 gemessene prozentuale Trübung unter oder gleich 25 Prozent bei 2,0 mm aufweist.

13. Artikel, hergestellt aus der Zusammensetzung nach irgendeinem der Ansprüche 1, 11 und 12.

## Revendications

1. Composition manifestant une résistance améliorée à la flamme, comprenant un mélange de 50 à 99 % en poids d'une ou de plusieurs résines de polyétherimide, de 0,1 à 10 % en poids d'un ou de plusieurs copolymères de silicone, de 1 à 50 % en poids d'une ou de plusieurs résines de polyestercarbonate d'aryle, contenant au moins 50 moles % de liaisons qui dérivent du résorcinol dont la structure est représentée ci-dessous : 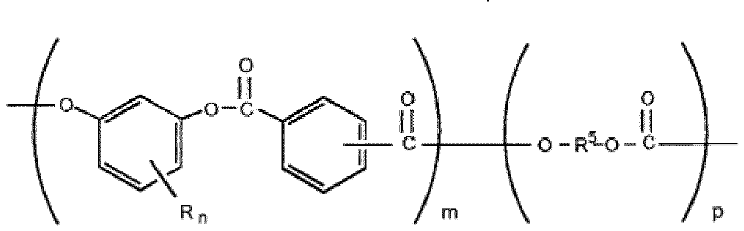 dans laquelle R représente au moins un membre choisi parmi le groupe comprenant un groupe alkyle en C₁-C₁₂, un groupe aryle en C₆-C₂₄, un groupe alkylaryle, un groupe alcoxy ou un atome d'halogène ; n est égal à 0 - 4 ; R⁵ représente au moins un radical organique divalent ; m est égal à 4 - 150 ; et p est égal à 2 - 200 ; et dans lequel une quantité supérieure ou égale à 50 moles % des liaisons polyester d'aryle sont des liaisons de type ester arylique qui dérivent du résorcinol, le copolymère de polyester d'aryle à base de résorcinol est essentiellement exempt de liaisons anhydrides reliant au moins deux motifs monomères de la chaîne polyester et manifeste une diminution du poids moléculaire inférieure à 10 % lorsqu'on chauffe le copolymère à une température de 280 à 290 °C pendant cinq minutes, de 0 à 2 % en poids d'un ou de plusieurs stabilisateurs contenant du phosphore et de 0 à 20 % en poids d'un ou de plusieurs oxydes métalliques.

2. Composition selon la revendication 1, dans laquelle le copolymère de silicone est choisi parmi le groupe constitué par des polyimide siloxanes, des polyétherimide siloxanes, des polyétherimide sulfone siloxanes, des polycarbonate siloxanes, des polyestercarbonate siloxanes, des polysulfone siloxanes, des polyéther sulfone siloxanes, des polyphénylène éther sulfone siloxanes et leurs mélanges.

3. Composition selon la revendication 1, dans laquelle la teneur en copolymère de silicone représente de 0,1 à 10,0 % en poids du mélange polymère.

4. Composition selon la revendication 1, dans laquelle le copolymère de silicone possède une teneur en siloxane s'élevant de 20 à 50 % en poids.

5. Composition selon la revendication 1, dans laquelle les polyétherimides possèdent un rapport des atomes d'hydrogène aux atomes de carbone inférieur ou égal à 0,75.

6. Composition selon la revendication 1, comprenant en outre un ou plusieurs oxydes métalliques à concurrence de 0,1 à 20 % en poids du mélange polymère.

7. Composition selon la revendication 1, possédant une température de déformation à chaud (HDT), telle qu'on la mesure via la norme ASTM D648, supérieure ou égale à 150 °C.

8. Composition selon la revendication 1, comprenant en outre un fluoropolymère.

9. Composition selon la revendication 1, comprenant en outre un composé contenant au moins un atome de bore.

10. Composition selon la revendication 1, qui possède un pic de débit calorifique, tel qu'on le mesure via la norme FAR 25.853, inférieur à 50 kW/m².

11. Composition selon la revendication 1, dans laquelle le mélange polymère retardateur de flamme possède un pourcentage de transmittance à 2,0 mm, tel qu'on le mesure via la norme ASTM D1003, supérieur ou égal à 50 %.

12. Composition selon la revendication 1, dans laquelle le mélange polymère retardateur de flamme possède un pourcentage de trouble à 2,0 mm, tel qu'on le mesure via la norme ASTM D1003, inférieur ou égal à 25 %.

13. Article fabriqué à partir de la composition selon l'une quelconque des revendications 1, 11 et 12.
